# EUROPÄISCHE PATENTSCHRIFT

(11) **EP 3 385 239 B1**
(45) Veröffentlichungstag und Bekanntmachung des Hinweises auf die Patenterteilung: **24.01.2024**
(21) Anmeldenummer: 17164720.9
(22) Anmeldetag: 04.04.2017
(51) Int. Cl.: C04B 24/06, C04B 24/12, C04B 28/02, C04B 28/14

(54) **BELEGREIFEKENNZEICHNUNG**
VOUCHER MATURITY MARKING
DÉTECTION DE REVÊTEMENT

(43) Veröffentlichungstag der Anmeldung: 10.10.2018
(73) Patentinhaber: Uzin Utz AG, 89079 Ulm (DE)
(72) Erfinder: WILDE, Markus, 89079 Ulm (DE); GRETZ, Markus, 89079 Ulm (DE); TSALOS, Johannis, 89079 Ulm (DE)
(74) Vertreter: Isarpatent

(56) Entgegenhaltungen:
- EP-A2- 2 425 948
- WO-A1-2008/003672
- BE-A- 470 254
- CN-A- 105 621 962
- KR-B1- 101 609 697

## Beschreibung

### Gebiet der Erfindung

Die vorliegende Erfindung betrifft die Verwendung von Fluorescein oder Fluoresceinderivaten als Indikator für die Belegreife einer mit Wasser angemischten Fußbodenspachtelmasse, die einen alkalischen pH-Wert im Bereich von pH 8-14 aufweist.

### Technischer Hintergrund

Die Verlegung von Bodenbelägen wie beispielsweise PVC-, Kautschuk-, Textilbelägen stellt besondere Anforderungen an den Untergrund. Zum Ausgleichen von Boden- bzw. Rohbodenunebenheiten werden Ausgleichs-/Spachtelmassen eingesetzt. Diese sorgen unter anderem für eine Nivellierung oder für eine konstante Saugfähigkeit des Untergrunds. Die Saugfähigkeit ist insbesondere für die nachfolgende Verklebung von Bodenbelägen mit wässrigen Klebstoffsystemen (z.B. Dispersionsklebstoffen) von großer Bedeutung.

Spachtel- und Ausgleichsmassen werden häufig als einkomponentige, werkseitig gemischte Trockenmörtel angeboten. Einkomponentige Trockenmörtelsysteme sind formulierte Pulverprodukte, die vor der Applikation mit Wasser angemischt werden und dadurch eine verarbeitbare Konsistenz erhalten.

Als Bindemittel werden in Spachtel-/Ausgleichsmassen überwiegend mineralische Stoffe eingesetzt. Diese reagieren durch in Kontakt bringen mit Wasser in Lösungs- und Kristallisationsprozessen zu so genannten Hydratationsprodukten welche für die Festigkeit von Baustoffen verantwortlich sind. Als Bindemittel in Spachtelmassen werden u.a. zementäre Bindemittel (z.B. Portlandzement, Kompositzemente, Tonerdeschmelzzemente), Kalke oder Gips (Calciumsulfat-Bindemittel) in verschiedenen Modifikationen eingesetzt (z.B. Anhydrit, Halb-Hydrat). In Spachtelmassen kommen häufig Kombinationen verschiedener mineralischer Bindemittel zum Einsatz. Neben den mineralischen Bindemitteln enthalten die beschriebenen Spachtelmassen Füllstoffe (z.B. Sand, Kalksteinmehl), Polymere (z.B. redispergierbare Dispersionspulver), sowie organische und anorganische Additive zur Steuerung der verarbeitungstechnischen und produkttechnischen Eigenschaften.

Die Sicherstellung eines schnellen Baufortschritts ist eine Hauptanforderung an Spachtel-/ Ausgleichsmassen. Hierunter ist eine funktionale, schadensfreie Verlegung von Bodenbelägen auf den oben genannten Bauprodukten zu verstehen. Für eine funktionale, schadensfreie Verlegung von Bodenbelägen muss der Untergrund eine ausreichend geringe Restfeuchte aufweisen. Dies gilt insbesondere bei der Verlegung von dampfdichten Belägen (z.B. PVC, Kautschuk). Nach der Verlegung solcher Beläge kann chemisch und/oder physikalisch ungebundenes Wasser aus dem Untergrund nur extrem langsam entweichen und bei fortdauernder Einwirkung zur Schädigung des Untergrunds und zur Reduktion der technischen Funktionalität bis hin zum vollständigen Versagen der Verklebung führen (z.B. Blasenbildung, Ablösungen). Die Belegreife einer Spachtelmasse entspricht dem Zeitraum zwischen Applikation derselben und dem Zeitpunkt, ab dem eine funktionale Verklebung von Bodenbelägen möglich ist. Bei Erreichung der Belegreife ist eine ausreichend geringe Restfeuchte vorhanden bzw. kann durch die Applikation des Klebstoffs eingebrachtes Wasser kompensiert werden, so dass keine Schädigung der Klebeverbindung eintritt.

Um die Verarbeitungskonsistenz zu erreichen, werden Trockenmörtelsysteme mit Anmachwasser im Überschuss angemischt. Dies bedeutet, dass mehr Wasser zur Verfügung steht, als das Bindemittelsystem zum Abbinden und zur Bildung der Hydratationsprodukte benötigt. Überschüssiges Wasser muss also über die Oberfläche durch Verdunstung an die Umgebung abgegeben werden und/oder vom Untergrund aufgenommen werden.

Zementäre Produkte unterscheiden sich in ihrer Trockenzeit, sprich der Zeit bis zur Belegreife, deutlich von gipsbasierten Produkten, aber auch innerhalb der Gruppe der zementären und innerhalb der Gruppe der gipsbasierten Bindemittelsysteme gibt es Unterschiede je nach Bindemittelanteil und -Zusammensetzung; so existieren z.B. zementäre Schnellprodukte, die nach 1 Stunde belegreif sind (z.B. Uzin NC 172 BiTurbo, Uzin Utz AG, Ulm, Deutschland), aber auch zementäre und gipsbasierte Produkte, die erst nach 24 Stunden belegreif sind.

Daher ist es für den Verleger nicht einfach zu erkennen, wann eine Spachtelmasse trocken genug für die weiteren Verlegearbeiten ist. Dies hängt wesentlich von der Art und Zusammensetzung des Bindemittels ab.

Um daher die Belegreife von Ausgleichs-/Spachtelmassen genau anzuzeigen, wäre ein System wünschenswert, das die Belegreife einfach und ohne aufwändige Analysesysteme anzeigt.

Üblicherweise verläßt sich der Fachmann auf die technischen Produktdatenblätter der Hersteller, wobei die angegebenen Zeiten in der Regel lediglich auf Standardbedingungen (z.B. 20°C, 65% rel. Luftfeuchtigkeit) bezogen sind, so dass sich in der praktischen Anwendung bei abweichenden klimatischen Bedingungen Unterschiede ergeben können.

Es gibt bereits beispielsweise ein Produkt auf zementärer Basis, das mit einer gewissen Farbveränderung bei Belegreife wirbt, die Haftschlämme Ardex A 18 (Ardex GmbH, Witten, Deutschland). Allerdings ist diese Haftschlämme mit Pigment versehen und verändert sich nach der Trocknung lediglich von dunkelgrün nach hellgrün.

Weiter ist in WO 2008/003672 A1 ein Putz bzw. eine Pulverbeschichtung beschrieben, in dem durch Phenolphthalein und/oder Thymolphthalein ein Farbumschlag bei vollständiger Trocknung generiert wird. In diesem System wechselt die Farbe von rosaviolett im nassen Zustand zu weiß bei vollständiger Trocknung.

Einen echten Farbumschlag bei Belegreife gibt es bei zementären und gipsbasierten Spachtelmassen bislang nicht.

Daher liegt der Erfindung die Aufgabe zugrunde eine Spachtelmasse zur Verfügung zu stellen, die auf einfache und zuverlässige Weise zeigt, dass die Belegreife erreicht ist.

### Beschreibung der Erfindung

Diese Aufgabe wird gelöst durch die Verwendung von Fluorescein oder Fluoresceinderivaten als Indikator für die Belegreife einer mit Wasser angemischten Fußbodenspachtelmasse, die einen alkalischen pH-Wert im Bereich von pH 8-14 aufweist.

Durch den Einsatz von Fluorescein beispielsweise in einer Gipsspachtelmasse wurde überraschenderweise gefunden, dass nach Eintreten der Belegreife ein Farbwechsel der Masse von grünlich nach rötlich auftritt. Dies funktioniert über einen breiten Schichtstärkenbereich.

Weiterhin wurde beispielsweise auch eine zementäre Spachtelmasse mit Fluorescein versetzt, angemischt und gespachtelt. Die mit Wasser angemischte Spachtelmasse wies eine grau-grüne Farbe auf. Nach einiger Zeit veränderte sich die Farbe dann zu grau-rotstichig und zeigte die Belegreife korrekt an.

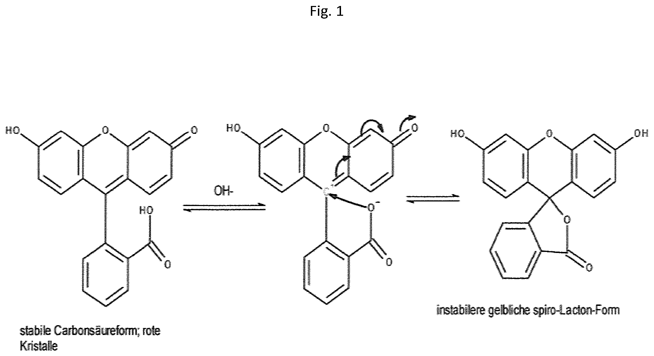

Ohne sich auf einen bestimmten Mechanismus beschränken zu wollen, ist der beobachtete Farbwechsel vermutlich darauf zurückzuführen, dass in der mit Wasser angemischten (üblicherweise alkalischen) Spachtelmasse Fluorescein in der instabileren gelblichen spiro-Lacton-Form vorliegt (siehe Figur 1). Infolge der Aushärtung der Spachtelmasse und der sich einstellenden Trocknung fällt der pH und das Fluorescein geht in die stabilere rote Carbonsäure-Form über. Daher wird bei Einsatz von Fluorescein in alkalisch eingestellten Spachtelmassen der Bereich der Belegreife durch einen Farbwechsel von grünlich nach rötlich angezeigt.

Die Erfindung betrifft daher die Verwendung von Fluorescein oder Fluoresceinderivaten als Indikator für die Belegreife einer mit Wasser angemischten Fußbodenspachtelmasse, die einen alkalischen pH-Wert im Bereich von pH 8-14 aufweist.

Das Derivat von Fluorescein kann Eosin und/oder ein Salz von Fluorescein, wie das Kaliumsalz oder das Natriumsalz von Fluorescein (Uranin) sein. Eosin kann Eosin B oder Eosin Y sein. Fluorescein oder die oben beschriebenen Derivate zeichnen sich alle durch eine sehr ähnliche chemische Struktur aus und besitzen eine Carbonsäuregruppe an einer vergleichbaren Position innerhalb des Moleküls. Die Carbonsäuregruppe wird im alkalischen Bereich deprotoniert, was infolge einer sterischen Umlagerung innerhalb des Moleküls zu einer Änderung des Absorptionsspektrums des Moleküls führt. Daher besitzen diese Moleküle abhängig vom pH Wert eine unterschiedliche Farbe und sind in den erfindungsgemäßen Spachtelmassen einsetzbar.

Gemäß einerweiteren Ausführungsform werden in den Spachtelmassen auch Mischungen aus Fluorescein, seinen Salzen, Eosin B oder Eosin Y eingesetzt. Dabei kann die Mischung mindestens 2, 3, 4, oder 5 Komponenten enthalten, die aus der Gruppe Fluorescein, Kaliumsalz von Fluorescein, Natriumsalz von Fluorescein, Eosin B oder Eosin Y ausgewählt sind. Die einzelnen Komponenten in der Mischung können in gleichen oder ungleichen Massen- oder Molverhältnissen vorliegen.

In einer bevorzugten Ausführungsform ist das Fluorescein oder Fluoresceinderivat, oder eine Mischung daraus, in einer zur Bestimmung der Belegreife ausreichenden Menge enthalten, vorzugsweise in einer Menge von 0,001-5,0 Gew.% bezogen auf das Gesamtgewicht der Trockenmasse. In einer bevorzugten Ausführungsform ist das Fluorescein oder Fluoresceinderivat, oder eine Mischung daraus, in einer Menge von 0,006-1,0 Gew.%, bevorzugt 0,01-0,5 Gew.% bezogen auf das Gesamtgewicht der Trockenmasse enthalten.

Spachtelmassen sind generell pulverförmig erhältlich und können mit Wasser zur gebrauchsfertigen Masse angemischt werden.

Die Spachtelmassen können mineralische Bindemittel, Füllstoffe (vorzugsweise Sand und/oder Kalksteinmehl), optional Polymere (vorzugsweise redispergierbare Dispersionspulver), sowie organische und/oder anorganische Additive, die zur Steuerung der verarbeitungstechnischen und produkttechnischen Eigenschaften geeignet sind, enthalten.

In einer weiteren bevorzugten Ausführungsform handelt es sich bei der mit Wasser angemischten Spachtelmasse um eine Zement- oder Calciumsulfat-basierte Spachtelmasse.

Geeignete Zement- oder Calciumsulfat-basierte Spachtelmassen sind aus dem Stand der Technik bekannt (z.B. UZIN NC 170 LevelStar oder UZIN NC 112 Turbo, beide Uzin Utz AG, Ulm, Deutschland).

In einer Ausführungsform ist die mit Wasser angemischte Spachtelmasse eine Calciumsulfat-basierte Spachtelmasse, die Zement enthalten kann. In einer bevorzugten Ausführungsform ist die mit Wasser angemischte Spachtelmasse eine Calciumsulfat-basierte Spachtelmasse, wie sie in WO 2016/142365 A1 beschrieben ist, die jedoch zusätzlich Fluorescein (seine Derivate, oder eine Mischung daraus) enthält. Diese Spachtelmasse umfasst beispielsweise:
a) 20 bis 80 Gew.-% mindestens eines Bindemittels auf Basis von Calciumsulfat;
b) 1 bis 15 Gew.-% mindestens eines Ettringitbildners;
c) 0,01 bis 5 Gew.-% mindestens eines Aktivators; und
d) 8 bis 60 Gew.-% mindestens eines Füllstoffes;
e) 0,1 bis 10 Gew.-% mindestens eines redispergierbaren Dispersionspulvers
f) Fluorescein, seine Derivate, oder eine Mischung daraus zu 0,001-5,0 Gew.%
jeweils bezogen auf die Gesamtmenge der Formulierung, wobei sich die Mengen zu 100 Gew.-% ergänzen.

In einer bevorzugten Ausführungsform der erfindungsgemäßen Verwendung von Fluorescein oder Fluoresceinderivaten als Indikator für die Belegreife einer mit Wasser angemischten Calciumsulfat-basierten Spachtelmasse ist das Bindemittel ausgewählt unter Calciumsulfat-Hemihydrat (Calciumsulfat-α-Hemihydrat und/oder Calciumsulfat-β-Hemihydrat), Calciumsulfat-Anhydrit, Calciumsulfat-Dihydrat und Mischungen von zwei oder mehreren davon. Vorzugsweise ist das Bindemittel Calciumsulfat-Hemihydrat. Das Bindemittel ist in einer Menge von 20 bis 80 Gew.-%, bezogen auf die Gesamtmasse der Formulierung, in der erfindungsgemäßen Calciumsulfat-basierten Spachtelmasse enthalten, insbesondere bevorzugt ist ein Gehalt von 35 bis 60 Gew.-%, ganz besonders bevorzugt ist ein Gehalt von 40 bis 55 Gew.-%, insbesondere 41 bis 55 Gew.-%.

Ein weiterer Bestandteil der Calciumsulfat-basierten Spachtelmasse kann mindestens ein Ettringitbildner sein. Der Ettringitgitbildner kann in einer Menge von 1 bis 15 Gew.-%, bezogen auf die Gesamtmasse der Formulierung, in der Formulierung enthalten sein. Bevorzugt ist ein Gehalt an Ettringitbildner von 3 bis 10 Gew.-%, insbesondere 3 bis 8 Gew.-%. Vorzugsweise ist der Ettringitbildner ausgewählt unter Calciumsulfoaluminatzement (CSA-Zement), Natriumaluminat, Tonerdeschmelzzement, Aluminiumsulfat und Mischungen davon. Ganz besonders bevorzugt ist die Verwendung von Calciumsulfoaluminatzement, Tonerdeschmelzzement oder Mischungen davon als Ettringitbildner.

Bevorzugt ist ein Tonerdeschmelzzement der chemischen Zusammensetzung 35-71 Gew.-% Al₂O₃, 27-40 Gew.-% CaO, 0,5-5 Gew.-% SiO₂ und 0,1 -20 Gew.-% Fe₂O₃ oder CSA-Zement der chemischen Zusammensetzung 27-31 Gew.-% Al₂O₃, 36-41 Gew.-% CaO, 2-7 Gew.-% SiO₂, < 1,5 Gew.-% Fe₂O₃, 12-16 Gew.-% SO₃ und < 5 Gew.-% MgO.

Ettringit ist ein Mineral aus der Mineralklasse der wasserhaltigen Sulfate mit fremden Anionen. Es kristallisiert mit der chemischen Zusammensetzung Ca₆Al₂[(OH)₁₂|(SO₄)₃]·26 H₂O und entwickelt meist gut ausgeprägte, prismatische oder nadelige Kristalle. Nach der in der Bauchemie üblicheren Schreibweise lautet die oxidische Summenformel: 3CaO·Al₂O₃·3CaSO₄·32H₂O. Unter Ettringitbildung ist die Entstehung von Ettringit, ausgehend von den Bestandteilen a) und b) der Formulierung zu verstehen. Die Bildung von Ettringit aus den genannten Komponenten a) und b) stellt eine vorteilhafte Möglichkeit dar, Wasser zu binden. Der Anteil an Calciumsulfatbindemittel und Ettringitbildner an der Gesamtformulierung beträgt vorzugsweise etwa 40-60 Gew.-%.

Durch die Zugabe eines Ettringitbildners zur Calciumsulfat-basierten Spachtelmasse kann, mittels der oben aufgezeigten Bindung von Wasser, eine schnelle Trocknung und Abbinden der aufgetragenen Spachtelmassen sichergestellt werden.

Die Calciumsulfat-basierte Spachtelmasse kann zudem mindestens einen Aktivator enthalten, der vorzugsweise ausgewählt ist unter Portland-Zement, Calciumhydroxid, Natriumhydroxid, Kaliumhydroxid, Alkaliwassergläsern und Mischungen davon. Insbesondere bevorzugt ist Portland-Zement oder Calciumhydroxid oder Mischungen davon.

Der oder die Aktivatoren werden zugegeben, um den pH-Wert der Calciumsulfat-basierten Spachtelmasse zu steuern, vorzugsweise zu erhöhen. Beispielsweise wird eine Menge an Aktivator zur Calciumsulfat-basierten Spachtelmasse gegeben, die ausreichend ist, um einen pH-Wert von 8 bis 14 einzustellen. Insbesondere bevorzugt ist es, wenn durch die Zugabe des Aktivators ein pH-Wert von 9 bis 13 eingestellt werden kann. Die Einstellung des pH-Werts durch die Aktivatorzugabe auf einen Wert von 9 bis 12, insbesondere 10 bis 11, hat den Effekt, dass bei einem pH-Wert im genannten Bereich die Ettringitbildung in der Calciumsulfat-basierten Spachtelmasse erfolgt. Vorteilhafterweise erfolgt die Ettringitbildung also nicht spontan, sondern gesteuert durch Aktivatorzugabe.

Der Aktivator ist in der Calciumsulfat-basierten Spachtelmasse in einer Menge von 0,01 bis 5 Gew.-%, bezogen auf die Gesamtmasse der Spachtelmasse, enthalten. Vorzugsweise ist der Aktivator in einer Menge von 0,1 bis 2 Gew.-%, bezogen auf die Gesamtmasse der Formulierung, in der Formulierung enthalten.

In der Calciumsulfat-basierten Spachtelmasse können neben den Komponenten a) bis c) Füllstoffe in einer Menge von 8 bis 60 Gew.-%, bezogen auf die Gesamtmasse der Formulierung, enthalten sein. Die Menge an Füllstoffen beträgt vorzugsweise 30 bis 60 Gew.-%, insbesondere 35 bis 55 Gew.-%, bezogen auf die Gesamtmasse der Formulierung. Beispiele für Füllstoffe sind Quarzsande, Kalkstein und Kalksteinmehle, Dolomit, Talk, Glimmer, sowie Leichtfüllstoffe wie z.B. Blähglasgranulate oder Blähtone. Darüber hinaus sind auch latent hydraulische Bestandteile wie Puzzolane, Flugaschen oder Hochofenschlacke geeignet. Die mittlere Korngröße des Füllstoffs beträgt vorzugsweise 0,001 bis 10 mm, insbesondere 0,005 bis 8 mm. Bevorzugte Füllstoffe sind Sand oder Kalksteinmehl und Mischungen davon.

In der Calciumsulfat-basierten Spachtelmasse können neben den Komponenten a) bis d) redispergierbare Dispersionspulver in einer Menge von 0,1 bis 10 Gew.-%, bezogen auf die Gesamtmasse der Formulierung, enthalten sein. Die Menge an redispergierbarem Dispersionspulver beträgt vorzugsweise 0,5 bis 10 Gew.-%, insbesondere 1,0 bis 10 Gew.-%, bezogen auf die Gesamtmasse der Formulierung.

Redispergierbare Dispersionspulver können Polymere oder Copolymere auf Basis von Vinylaromaten, wie Styrol, Vinylestern von C₁-C₁₅ Alkylcarbonsäuren, Dienen, Estern der (Meth)acrylsäure mit C₁-C₁₂-Alkanolen, Vinylhalogeniden und/oder Olefinen sein. Bevorzugt sind Vinylestern von C₁-C₁₅ Alkylcarbonsäuren, Copolymeren von Vinylestern von C₁-C₁₅ Alkylcarbonsäuren mit Olefinen oder Copolymeren von Estern der (Meth)acrylsäure mit C₁-C₁₂-Alkanolen mit Styrol. Als Beispiele seien Ethylen-Vinylacetat-Copolymere, Ethylen-Vinylversatat-Copolymere oder Styrolacrylate genannt.

Vorzugsweise verwendet man als redispergierbares Dispersionspulver ein Polymer oder Copolymer mit einer Mindestfilmbildetemperatur (MFT) im Bereich von etwa -5 °C bis etwa +10 °C. In einer bevorzugten Ausführungsform umfasst die Calciumsulfat-basierte Spachtelmasse zusätzlich mindestens ein Additiv in einer Menge von 0,01 bis 7 Gew.-%, vorzugsweise 0,1 bis 5 Gew.-%, bezogen auf die Gesamtmasse der Formulierung. Vorzugsweise ist das Additiv ausgewählt unter Verflüssigern, Abbindeverzögerern, Abbindebeschleunigern, Verdickern, Stabilisatoren, Kunststofffasern, Entschäumern, Luftporenbildnern, Dispergier-/Netzmitteln, Hydrophobierungsmittel und Mischungen davon.

Verflüssiger sind beispielsweise Casein, Melaminformaldehydkondensate oder Kammpolymere auf Basis von Poly(meth)acrylsäure mit Polyethylenoxidseitenketten (PCEs, Polycarboxylat-ether). Beispiele für Verdicker sind mineralische Schichtsilikate wie Bentonit oder Talkum. Stabilisatoren können organische Stabilisatoren beispielsweise Polysaccharide wie Stärkeether, Guar Gum, Xanthan Gum und Celluloseether und modifizierte Celluloseether, zum Beispiel Methylcellulose, Ethylcellulose, Propylcellulose und Methylethylcellulose, Hydroxylalkylcellulose wie Hydroxyethylcellulose (HEC), Hydroxypropylcellulose (HPC) und Hydroxyethylhydroxypropylcellulose, Alkylhydroxyalkyl-cellulose wie Methylhydroxyethylcellulose (MHEC), Methylhydroxypropylcelluose (MHPC) und Propylhydroxypropylcellulose, oder Polycarbonsäuren wie Polyacrylsäure sowie Polyvinylalkohole sein. Abbindeverzögerer sind beispielsweise Fruchtsäuren (Weinsäure oder Zitronensäure), Phosphate, Polyphosphate, Alkaligluconate, Saccharide oder Alkali-Tartrate. Geeignete Abbindebeschleuniger sind zum Beispiel Alkalicarbonate, Natriumsulfat, Kaliumsulfat oder Calciumsulfat-Dihydrat. Beispiele für Kunststofffasern sind Polyolefinfasern mit einer Länge von 0,1 bis 1 mm, insbesondere Polypropylenfasern. Weitere Beispiele hierfür sind Polyacrylnitrilfasern. Beispiele für Entschäumer sind modifizierte Siloxane auf anorganischen Trägermaterialien. Hydrophobierende Additive sind beispielsweise Salze langkettiger Fettsäuren oder Organosiliciumverbindungen.

Zuletzt kann die Calciumsulfat-basierte Spachtelmasse Fluorescein, seine Derivate, oder eine Mischung daraus zu 0,001-5,0 Gew.% enthalten.

Die Herstellung der Calciumsulfat-basierten Spachtelmassen kann durch sukzessives Vermischen der Bestandteile in beliebiger Reihenfolge oder durch gleichzeitiges Vermischen in einer für diese Zwecke üblichen Mischvorrichtung erfolgen.

In einer anderen Ausführungsform ist die mit Wasser angemischte Fußbodenspachtelmasse eine Zement-basierte Spachtelmasse, wie sie in WO 2008/003672 A1 beschrieben ist. WO 2008/003672 A1 betrifft Spachtelmassen, die als essentielle Bestandteile Portland- Zement, Füllstoffe oder Pigmente enthalten. Dabei werden zum Beispiel Spachtelmassen auf zementärer Basis mit Zement als Hauptbindemittel beschrieben. Die Spachtelmassen auf zementärer Basis enthalten als Bindemittelkomponente eine Mischung aus Aluminatzement (20 bis 40 Gew.-%, bezogen auf die gesamte Spachtelmasse) und eine Quelle reaktiver Sulfate (z.B. Calciumsulfat) in einer Menge von 2 bis 15 Gew.-%, bezogen auf die gesamte Spachtelmasse. Die Herstellung der Spachtelmassen erfolgt durch sukzessives Vermischen der Bestandteile in beliebiger Reihenfolge oder durch gleichzeitiges Vermischen in einer für diese Zwecke üblichen Mischvorrichtung.

Die mit Wasser angemischte Spachtelmasse weist gebrauchsfertig einen alkalischen pH-Wert im Bereich von pH 8-14 auf. Vorzugsweise weist die gebrauchsfertige Zusammensetzung einen alkalischen pH-Wert im Bereich von pH 9-13, pH 9-12 oder pH 10-11 auf.

Der pH Wert der mit Wasser angemischten Fußbodenspachtelmasse lässt sich durch jedes geeignete Verfahren zur pH Messung von Spachtelmassen, bestimmen. Die Bestimmung des pH erfolgt in Anlehnung an die Norm EN 13454-2:2003, Punkt 4.1. Diese Norm betrifft gispbasierte Spachtelmassen, ist jedoch analog auch für zementäre Produkte anwendbar.

Gemäß der Norm EN 13454-2:2003 wird 1 Massen-Teil der pulverförmigen, anmischbaren Spachtelmasse in 10 Teilen deionisiertem oder destilliertem Wasser gelöst. Die erhaltene Lösung wird 5 min gerührt, und anschließend der pH mit einem pH-Messgerät oder einem pH Papier auf 0,5 genau abgelesen. Als pH-Messgerät kann hier beispielsweise das Knick LaborpH-Meter 766 eingesetzt werden. Als pH-Indikatorpapier können Merck Millipore pH Indikatorpapier Universalindikator oder Merck Millipore MColorpHast^{®} pH Indicator strips pH 0-14 Einsatz finden.

Die mit Wasser angemischte Spachtelmasse kann Wasser in jedem geeigneten Verhältnis enthalten. Insbesondere kann die mit Wasser angemischte Spachtelmasse Wasser in einer Menge von 10-60 Gew.%, 15-50%, oder 20-40% bezogen auf das Gesamtgewicht der Trockenmasse aufweisen.

Die Erfindung bezieht sich auf die Verwendung von Fluorescein, Fluoresceinderivaten, oder einer Mischung daraus als Indikator für die Belegreife einer mit Wasser angemischten Fußbodenspachtelmasse, die einen alkalischen pH-Wert im Bereich von pH 8-14 aufweist.

Beschrieben wird ein Verfahren zur Bestimmung der Belegreife einer auf einem Untergrund aufgebrachten Spachtelmasse, umfassend die Schritte:
a) Bereitstellen einer mit Wasser anmischbaren Spachtelmasse, vorzugsweise Fußbodenspachtelmasse, und Wasser;
b) Vermischen der mit Wasser anmischbaren Spachtelmasse und Wasser in einem geeigneten Mengenverhältnis;
c) Aufbringen und Verteilen, insbesondere gleichmäßiges Verteilen, der Spachtelmasse auf dem Untergrund; wobei ein Farbwechsel der Spachtelmasse die Belegreife der auf dem Untergrund verteilten Spachtelmasse anzeigt.

Bei diesem Verfahren tritt bei Erreichen der Belegreife ein Farbwechsel von einer grünlichen zu einer rötlichen Farbe ein, insbesondere Farbwechsel von einer grüngelben zu einer lachsfarbenen Farbe oder von einer graugrünen zu einer grauroten Farbe.

Bei diesem Verfahren Verfahren ist die Schichtdicke der auf dem Untergrund aufgebrachten Spachtelmasse ungefähr 1-10 mm, 2 - 9 mm, 3 - 8 mm, 4 - 7 mm, oder 5 - 6 mm.

Außerdem wird das Verfahren, vorzugsweise, in Schritt c) bei 5° - 25°C, bevorzugt bei ungefähr 20°C durchgeführt.

Die Belegreife eines Untergrunds entspricht dem Zeitraum zwischen Applikation der Ausgleichs-/Spachtelmasse und dem Zeitpunkt, ab dem eine funktionale Verklebung von Belägen, vorzugsweisen Bodenbelägen, möglich ist. Im Allgemeinen sind für eine funktionale, schadensfreie Beklebung Schälwerte größer als 0,6 N/mm nach 24 Stunden nach der Verklebung notwendig. Des Weiteren sollten sich diese Werte kontinuierlich erhöhen und vorzugsweise mindestens 1 N/mm (nach 4 Tagen nach der Verklebung) betragen.

Definitionsgemäß ist die Belegreife der Spachtelmasse also erreicht, wenn 24 h nach der Verklebung ein Schälwert von mindestens 0,6 N/mm (z.B. 0,7 N/mm, 0,8 N/mm, oder 0,9 N/mm) und nach 96 h nach der Verklebung ein Schälwert von mindestens 1 N/mm (z.B. 1,1 N/mm, oder 1,2 N/mm) erzielt wird. Wird der Klebstoff vor der Belegreife der Spachtelmasse appliziert, werden die vorgenannten Werte nicht erreicht.

Zur Beurteilung der Belegreife werden die Spachtel-/Ausgleichsmassen in einer Schichtstärke von beispielsweise 3 mm appliziert. Hierbei kann beispielsweise folgendes Vorgehen gewählt werden: Als Untergrund wird ein Betonuntergrund gewählt, welcher mit einer wasserdampfbremsenden 1-komponentigen Schnellgrundierung (z.B. UZIN PE 414 Turbo) und einem dispersionsbasierten Haftvermittler (z.B. Uzin PE 280) für die nachfolgende Spachtelung vorbehandelt wurde. Beispielsweise wird eine Betonplatte (z.B. 40 cm x 40 cm) vorgelegt. Dabei kann die Grundierung in folgenden Schritten erfolgen: die Platte wird zunächst mit z.B. 250 - 350 g/m² der 1-komponentigen wasserdampfbremsenden Schnellgrundierung vorgestrichen. Das Grundieren kann in zwei Schichten im Kreuzgang erfolgen, wobei die Trocknungszeit jeweils 2 Stunden betragen kann. Darauf kann eine Dispersionsgrundierung (z.B. Uzin PE 280), die als Haftvermittlung für die nachfolgende Spachtelung dient, aufgebracht werden. Die Trocknungszeit kann ca. 1 Stunde betragen.

Daraufhin wird auf der wie oben beschriebenen vorbehandelten Betonplatte die mit Wasser angemischte Spachtelmasse in einer Schichtdicke von ca. 2-4 mm, vorzugsweise 2,5 mm oder 3 mm, appliziert. Die Trocknungszeit der Spachtelmasse kann zwischen 6 bis 26 Stunden variieren.

Anschließend erfolgt die Beklebung mit relativ dampfdichten Bodenbelägen. Zur Verklebung von PVC (z.B. Armstrong DLW Royal) wird beispielsweise ein dispersionsbasierter Haftklebstoff (z.B. UZIN KE 2000 S) in einer Menge von ca. 300 g/m², z.B. mit einem Spachtel aufgetragen. Kautschuk-Beläge (z.B. Nora Noraplan Mega) werden beispielsweise mit einem Nassbett-Dispersionsklebstoff (z.B. UZIN KE 66) verklebt.

Daraufhin werden zu verschiedenen Zeiten nach der Verklebung Belagsstreifen (Breite: 5 x 25 cm) mittels einer Federwaage vom Untergrund abgeschält und so die Schälwerte (in N/mm) ermittelt.

Die Bestimmung des Schälwerts erfolgt in Anlehnung an die Norm EN1372:2015 "Prüfverfahren für Klebstoffe für Boden- und Wandbeläge - Schälversuch". Zur Vereinfachung des Verfahrens wird anstelle der in der Norm vorgesehenen Rollenschereinrichtung (automatisierte Prüfmaschine) eine Federwaage manuell verwendet, um die Bodenbeläge manuell abzuschälen.

Die Beurteilung der Schälkraft erfolgt nun zu unterschiedlichen Zeitpunkten, z.B. 4, 6, 8, 10, 12, 14, 16, 20, 24, oder 26 bis zu 96 h Stunden nach der Verklebung. Dabei werden zum jeweiligen Messpunkt ein oder mehrere Belagsstreifen mit einem Kraftmesser (z.B. einer Federwaage) abgezogen.

Wird beispielsweise auf dem Betonuntergrund die Spachtelmasse nach einer Trocknungszeit von z.B. 4 h mit Belagsstreifen beklebt und nach 24 h ein Schälwert von 0,5 N/mm erreicht, würde dies bedeuten, dass die Belegreife zum Zeitpunkt der Beklebung noch nicht gegeben war.

Die folgenden Figuren und die folgenden Beispiele dienen zur Erläuterungen der Erfindung.

### Kurze Beschreibung der Figuren

**Figur 1** zeigt die Struktur von Fluorescein in Abhängigkeit vom pH Wert an. Dabei geht die stabile Carbonsäureform (rote Kristalle, linker Teil der Figur) im alkalischen Milieu in Folge von Deprotonierung (mittlerer Teil der Figur) in die instabilere gelbliche spiro-Lacton-Form über (rechter Teil der Figur). Der Vorgang ist reversibel.

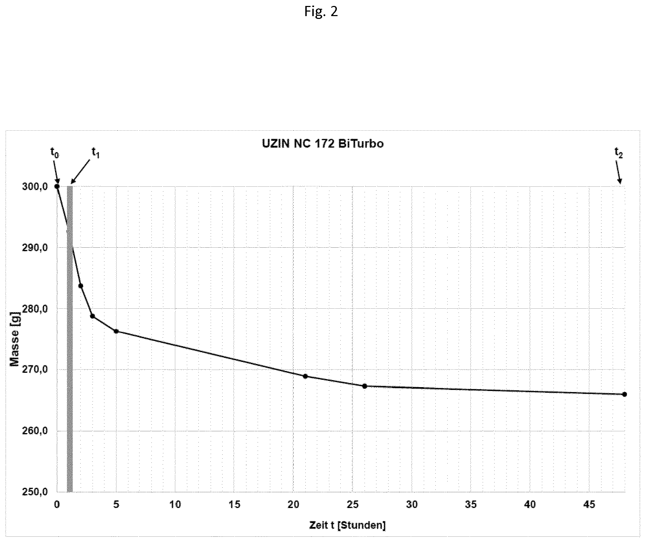

**Figur 2** zeigt einen Vergleich der Belegreife/Trocknung für das kommerziell erhältliche Produkt Uzin NC 172 BiTurbo. t₀ bezeichnet den Zeitpunkt des Untersuchungsbeginns, d.h. nach Auftrag der Spachtelmasse auf den Untergrund. t₁ bezeichnet den Zeitpunkt der experimentell ermittelten Belegreife (siehe vorstehend beschriebenes Verfahren), t₂ den Zeitpunkt der vollständigen Trocknung.

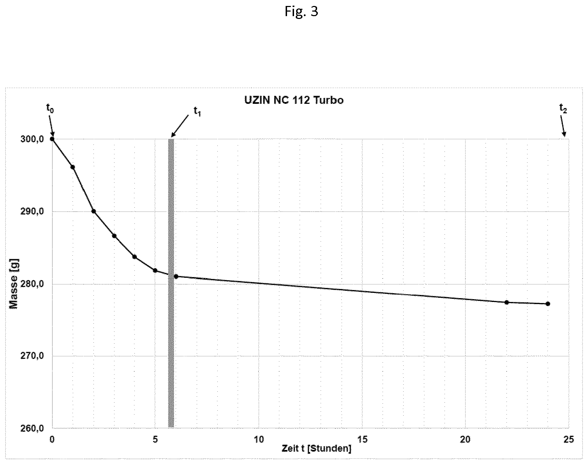

**Figur 3** zeigt einen Vergleich der Belegreife/Trocknung für das kommerziell erhältliche Produkt Uzin NC 112 Turbo. t₀ bezeichnet wie oben den Zeitpunkt des Untersuchungsbeginns, d.h. nach Auftrag der Spachtelmasse auf den Untergrund. t₁ bezeichnet den Zeitpunkt der experimentell ermittelten Belegreife (siehe vorstehend beschriebenes Verfahren), t₂ den Zeitpunkt der vollständigen Trocknung.

### Beispiele

### A Untersuchung verschiedener Spachtelmassen (pH-Abhängigkeit, mit/ohne Fluorescein)

Die folgenden Spachtelmassen wurden untersucht. Beispiel 1 stellt eine Gipsspachtelmasse mit Fluorescein, Beispiel 2 eine Spachtelmasse auf Zementbasis mit Fluorescein, Vergleichsbeispiel 1 eine Gipsspachtelmasse mit Fluorescein und Vergleichsbeispiel 2 eine zementäre Haftschlämme ohne Fluorescein, aber mit einem grünen Pigment oder Farbstoff, dar.
- Beispiel 1:: schnell belegreife Gipsspachtelmasse (Uzin NC 112 Turbo) mit pH > 10 mit 0,025 Gew.% Fluorescein bezogen auf das Gesamtgewicht der Trockenmasse, angemischt mit 19 Gew.% Wasser bezogen auf das Gesamtgewicht der Trockenmasse
- Beispiel 2:: NC 170 LevelStar mit 0,025 Gew.% Fluorescein bezogen auf das Gesamtgewicht der Trockenmasse, angemischt mit 26 Gew.% Wasser bezogen auf das Gesamtgewicht der Trockenmasse
- Vergleichsbeispiel 1:: Kommerziell erhältliche Spachtel-/Ausgleichsmasse auf Calciumsulfat-basis (Uzin NC 110) mit 0,025% Fluorescein bezogen auf das Gesamtgewicht der Trockenmasse, angemischt mit 24 Gew.% Wasser bezogen auf das Gesamtgewicht der Trockenmasse
- Vergleichsbeispiel 2:: Ardex A18 ohne Fluorescein, angemischt mit 23 Gew.% Wasser bezogen auf das Gesamtgewicht der Trockenmasse

Zur Beurteilung der Belegreife wurden das oben genannte Vorgehen gewählt: Spachtel-/Ausgleichsmassen wurden in einer Schichtstärke von ca. 3 mm appliziert. Als Untergrund wurde ein Betonuntergrund gewählt, welcher mit einer wasserdampfbremsenden 1-komponentigen Schnellgrundierung (UZIN PE 414 Turbo, Uzin Utz AG, Ulm, Deutschland) und einem dispersionsbasierten Haftvermittler (Uzin PE 280, Uzin Utz AG, Ulm, Deutschland) vorbehandelt wurde.

Wie oben beschrieben entspricht die Belegreife eines Untergrunds dem Zeitraum zwischen Applikation der Ausgleichs-/ Spachtelmasse und dem Zeitpunkt, ab dem eine funktionale Verklebung von Bodenbelägen möglich ist. Im Allgemeinen sind für eine funktionale, schadensfreie Beklebung der Spachtelmasse Schälwerte größer als 0,6 N/mm nach 24 Stunden nach der Verklebung notwendig. Des Weiteren sollten sich diese Werte kontinuierlich erhöhen und vorzugsweise mindestens 1 N/mm (nach 4Tagen nach der Verklebung) betragen.

### Ergebnisse

**Tabelle 1**

| Massen | Temperatur/ relative Luftfeuchte | Farbe zum Zeitpunkt der Spachtelmassen-Applikation | Farbe 6 h nach der Spachtel massen-Applikation | Farbe 16 h nach der Spachtelmassen-Applikation | Farbe 26 h nach der Spachtelmassen-Applikation |
|---|---|---|---|---|---|
| Beispiel 1a *Uzin NC 112 Turbo mit Fluorescein* | 20°C /ca. 65% | Grün-gelb | lachsfarben (Belegreife erreicht) | lachsfarben | lachsfarben |
| Beispiel 1b *Uzin NC 112 Turbo mit Fluorescein* | 10°C/ ca. 80% | Grün-gelb | Grün-gelb | lachsfarben (Belegreife erreicht) | lachsfarben |
| Vergleichsbeispiel 1 *Uzin NC 110 mit Fluorescein* | 20°C/ca.65% | Grün-gelb | Grün-gelb | Grün-gelb | Grün-gelb (Belegreife erreicht) |

Es wurde überraschenderweise gefunden, dass bei der Gipsspachtelmasse NC 112 Turbo unter Zusatz von Fluorescein im Bereich der in den bisherigen Versuchen ermittelten Belegreife von 6 h ein Farbwechsel von grüngelb zu lachsfarben eintritt (Tabelle 1, Beispiel 1a; Fig. 3). Die Temperatur/relative Luftfeuchte entsprach hier 20°C/ca. 65%. Dies funktioniert über den gesamten Schichtstärkenbereich von 1-10 mm; bei niedrigeren Temperaturen (Tabelle 1, Beispiel 1b) ist ein Farbwechsel zu einem späteren Zeitpunkt zu beobachten (Temperatur 10°C, relative Luftfeuchte ca. 80%). Das Vergleichsbeispiel 1 (Tabelle 1, Uzin NC 110) zeigt keinen derartigen Farbumschlag, was auf den neutralen pH-Wert der Zusammensetzung zurückzuführen ist.

**Tabelle 2**

| Massen | Temperatur/ relative Luftfeuchte | Farbe zum Zeitpunkt der Spachtelmassen-Applikation | Farbe 6 h nach der Spachtelmassen-Applikation | Farbe 16 h nach der Spachtelmassen-Applikation | Farbe 26 h nach der Spachtelmassen-Applikation |
|---|---|---|---|---|---|
| Beispiel 2 *Uzin NC 170 LevelStar mit Fluorescein* | 20°C /ca. 65% | Grau-grün | Grau-grün | Grau-rot (Belegreife erreicht) | Grau-rot |
| Vergleichsbeispiel 2 *Ardex A18* | 20°C /ca. 65% | dunkelgrün | dunkelgrün | hellgrün | hellgrün |

Weiterhin wurde ein zementäres Produkt (Uzin NC 170 LevelStar) mit Fluorescein versetzt, mit Wasser angemischt und gespachtelt (Tabelle 2, Beispiel 2). Nach der Applikation der Spachtelmasse wies das Produkt eine grau-grüne Farbe auf, die nach ca. 16 h nach grau-rotstichig umschlug. Die Belegreife konnte mit dem vorher beschriebenen Verfahren bei ca. 16 h ermittelt werden, was sich ebenfalls mit dem Farbumschlag deckt.

Damit ist gezeigt, dass der beobachtete Farbwechsel zur Bestimmung der Belegreife sowohl bei Spachtelmassen auf Gipsbasis als auch auf Zementbasis herangezogen werden kann. Insbesondere tritt der Farbwechsel auch dann auf, wenn die Applikation abweichend von Normbedingungen bei niedrigerer Temperatur und erhöhter Luftfeuchte erfolgt.

In Vergleichsbeispiel 2 (Tabelle 2, Ardex A18; kein Fluorescein) war kein echter Farbumschlag zu beobachten, lediglich eine leichte Farbänderung von dunkelgrün nach hellgrün.

### B Unterscheidung Trocknungsgrad und Belegreife

### Uzin NC 172 BiTurbo

In diesem Beispiel wurde zunächst die kommerziell erhältliche Zusammensetzung Uzin NC 172 BiTurbo untersucht. Es handelt sich um eine zementäre Spachtelmasse mit mineralischen Zuschlagsstoffen, Polyvinylacetat-Copolymeren, Hochleistungsverflüssiger und Additiven, der 0,025 Gew.% Fluorescein bezogen auf das Gesamtgewicht der Trockenmasse zugesetzt wurde.

Untersucht wurde der Wasserverlust der mit Wasser angemischten und auf den Untergrund aufgebrachten Spachtelmasse in Abhängigkeit von der Zeit (siehe auch Fig. 2). Tabelle 3 gibt die in Fig. 2 graphisch dargestellten Werte in tabellarischer Form wieder.

### Mit Wasser angemischte UZIN NC 172 BiTurbo

### (25 Gew.% Wasser bezogen auf das Gesamtgewicht der Trockenmasse)

**Tabelle 3**

| **t [h]** | **Gesamtmasse [g]** | **Farbumschlag** | **Bemerkung** |
|---|---|---|---|
| 0 | 300,0 | grün | |
| 1 | 292,6 | Farbumschlag nach rötlich | Belegreife erreicht |
| 2 | 283,7 | | |
| 3 | 278,8 | | |
| 5 | 276,3 | | |
| 21 | 268,9 | | |
| 26 | 267,3 | | |
| 48 | 266,0 | | |

Damit zeigt sich ein deutlicher Unterschied zwischen der durch die erfindungsgemäße Spachtelmasse angezeigten Belegreife und der Trocknung. Die Belegreife, angezeigt durch Farbumschlag, trat bereits nach ca. 1 h ein, wohingegen die eigentliche Trocknung (vollständiger Wasserverlust) noch mindestens bis zum nächsten Tag (48 h) voranschritt.

In den bislang im Stand der Technik beschriebenen Systemen gibt der Farbumschlag lediglich an, dass die jeweiligen Produkte vollständig getrocknet sind; im Gegensatz hierzu zeigt der Farbumschlag im Falle der vorliegenden Erfindung an, dass das Produkt belegreif ist in dem Sinne, dass eine schadensfreie Verklebung möglich ist.

Bei Uzin NC 172 BiTurbo liegt die mit dem oben beschriebenen Verfahren ermittelte Belegreife bei ca. 1 h; der Farbumschlag mit Fluorescein wird bei 1 h angezeigt, also im richtigen Zeitraum. Ein Beweis für die Belegreife nach 1 h gemäß Definition (Schälwert > 0,6 N/mm nach 24 h nach der Verklebung und > 1,0 N/mm nach 4 Tagen nach der Verklebung) wurde also mit Uzin NC 172 BiTurbo geführt. Die Schälwerte betrugen 24 h nach der Verklebung 1,1 N/mm und nach 4 Tagen 2,1 N/mm. Somit ist eine schadensfreie Verklebung gewährleistet.

### Uzin NC 112 Turbo

In einem weiteren Test wurde die Belegreife von Uzin NC 112 Turbo untersucht. Die Spachtelmasse enthält ebenfalls Fluorescein (s.o.).

Untersucht wurde der Wasserverlust der mit Wasser angemischten und auf den Untergrund aufgebrachten Spachtelmasse in Abhängigkeit von der Zeit (siehe auch Fig. 3). Tabelle 4 gibt die in Fig. 3 graphisch dargestellten Werte in tabellarischer Form wieder.

### Mit Wasser angemischte UZIN NC 112 Turbo

### (19 Gew.% Wasser bezogen auf das Gesamtgewicht der Trockenmasse)

**Tabelle 4**

| **t [h]** | **Gesamtmasse [g]** | **Farbumschlag** | **Bemerkung** |
|---|---|---|---|
| 0 | 300,0 | grün | |
| 1 | 296,1 | | |
| 2 | 290,0 | | |
| 3 | 286,6 | | |
| 4 | 283,7 | | |
| 5 | 281,8 | | |
| 6 | 281,0 | Farbumschlag nach rötlich | Belegreife erreicht |
| 22 | 277,4 | | |
| 24 | 277,2 | | |

Auch mit Uzin NC 112 Turbo ist ein Farbumschlag mit Fluorescein zu sehen; der Umschlag erfolgt hier etwas später als z.B. bei Uzin NC 172 BiTurbo, d.h. bei ca. 6 h. Auch hier ergibt sich eine deutliche Differenz zwischen dem Zeitpunkt der Belegreife (t₁ = ca. 6 h) und der vollständigen Trocknung (t₂ = ca. 25 h).

### C Versuche mit alternativen Farbindikatoren

Es wurden die alternativen Farbumschlag-Indikatoren Bromthymolblau, Thymolblau und Phenolphthalein im Gipssystem Uzin NC 112 Turbo geprüft.

Thymolblau ist in den vorliegend verwendeten wässrigen alkalischen Systemen nicht ausreichend löslich. Phenolphthalein ist gut löslich aber bereits nach 1 h entfärbt, die Belegreife des Gipssystems Uzin NC 112 Turbo liegt jedoch bei 6 h. Damit erwies sich Phenolphthalein als zur Anzeige der Belegreife ungeeignet. Fluorescein zeigte in demselben Test nach 1 h noch die gleiche Farbe wie zu Beginn des Tests, d.h., es wurde kein Farbumschlag vor Erreichen der Belegreife angezeigt.

**Tabelle 5**

| Produkt | Farbindikator | Farbe Zeitpunkt bei Applikation der Spachtel masse | Farbe 1 Stunde nach Applikation der Spachtelmasse | Farbe 6 Stunden nach Applikation ***(= Zeitpunkt der nach dem vorher beschriebenen Verfahren ermittelten Belegreife)*** | Farbe 20 Stunden nach Applikation der Spachtelmasse |
|---|---|---|---|---|---|
| **UZIN NC 112 Turbo** | Fluorescein | grün | grün | rötlich | rötlich |
| | Bromthymolblau | blau (vereinzelt Punkte) | blau (vereinzelt Punkte) | blau (vereinzelt Punkte) | blau (vereinzelt Punkte) |
| | Phenolphthalein | rosa | weiß | weiß | weiß |
| | Thymolblau | blaue Punkte (inhomogen wg. Unlöslichkeit) | blaue Punkte (inhomogen wg. Unlöslichkeit) | blaue Punkte/braune (inhomogen wg. Unlöslichkeit) | blaue Punkte/braune (inhomogen wg. Unlöslichkeit) |

Fuorescein war demnach der einzige Farbindikator, der die Belegreife zuverlässig anzeigen konnte.

### Zusammenfassung der Versuche:

Der Unterschied zwischen dem Zeitpunkt der Belegreife der Spachtelmasse, der durch Fluorescein angezeigt wird und der vollständigen Trocknung der Spachtelmasse konnte gezeigt werden. Fluorescein funktioniert sowohl für Gipsspachtelmassen als auch für zementäre Spachtelmassen als Farbindikator für die Belegreife. Die bislang im Stand der Technik beschriebenen Indikatoren funktionierten zur Anzeige der Belegreife nicht.

## Patentansprüche

1. Verwendung von Fluorescein oder Fluoresceinderivaten als Indikator für die Belegreife einer mit Wasser angemischten Fußbodenspachtelmasse, die einen alkalischen pH-Wert im Bereich von pH 8-14 aufweist.

2. Verwendung nach Anspruch 1, wobei das Derivat aus Eosin und/oder Uranin ausgewählt ist.

3. Verwendung nach einem oder mehreren der vorhergehenden Ansprüche, wobei das Fluorescein/Fluoresceinderivat in einer zur Bestimmung der Belegreife ausreichenden Menge enthalten ist, vorzugsweise in einer Menge von 0,001-5,0 Gew.% bezogen auf das Gesamtgewicht der Trockenmasse.

4. Verwendung nach Anspruch 3, wobei das Fluorescein/Fluoresceinderivat in einer Menge von 0,006-1,0 Gew.%, bevorzugt 0,01-0,5 Gew.% bezogen auf das Gesamtgewicht der Trockenmasse enthalten ist.

5. Verwendung nach einem oder mehreren der vorhergehenden Ansprüche, bei der es sich um eine Zement- oder Calciumsulfat-basierte Fußbodenspachtelmasse handelt.

6. Verwendung nach einem oder mehreren der vorhergehenden Ansprüche, wobei die mit Wasser angemischte Fußbodenspachtelmasse einen alkalischen pH-Wert im Bereich von pH 9-12 aufweist.

7. Verwendung nach einem oder mehreren der vorhergehenden Ansprüche, wobei die mit Wasser angemischte Fußbodenspachtelmasse Wasser in einer Menge von 10-60 Gew.% bezogen auf das Gesamtgewicht der Trockenmasse aufweist.

## Claims

1. Use of fluorescein or fluorescein derivatives as an indicator for the readiness of a floor levelling compound that is mixed with water and that has an alkaline pH value in the range of pH 8-14.

2. Use according to claim 1, wherein the derivative is selected from eosin and/or uranine.

3. Use according to one or more of the preceding claims, wherein the fluorescein/fluorescein derivative is present in a quantity that is sufficient to determine the readiness, preferably in an amount of 0.001-5.0% by weight, based on the total weight of the dry mass.

4. Use according to claim 3, wherein the fluorescein/fluorescein derivative is contained in a quantity of 0.006-1.0% by weight, preferably 0.01-0.5% by weight, based on the total weight of the dry mass.

5. Use according to one or more of the preceding claims, in which it is a cement- or calcium-sulphate-based floor levelling compound.

6. Use according to one or more of the preceding claims, wherein the floor levelling compound that is mixed with water has an alkaline pH value in the range of pH 9-12.

7. Use according to one or more of the preceding claims, wherein the floor levelling compound that is mixed with water comprises water in a quantity of 10-60% by weight, based on the total weight of the dry mass.

## Revendications

1. Utilisation de fluorescéine ou de dérivés de fluorescéine comme indicateur de l'aptitude à la pose d'un enduit de sol mélangé à de l'eau, qui présente une valeur de pH alcaline comprise dans la plage de pH de 8 à 14.

2. Utilisation selon la revendication 1, dans laquelle le dérivé est choisi parmi l'éosine et/ou l'uranine.

3. Utilisation selon une ou plusieurs des revendications précédentes, dans laquelle la fluorescéine/le dérivé de fluorescéine est contenu(e) dans une quantité suffisante pour déterminer l'aptitude à la pose, de préférence dans une quantité de 0,001 à 5,0 % en poids par rapport au poids total de la masse sèche.

4. Utilisation selon la revendication 3, dans laquelle la fluorescéine/le dérivé de fluorescéine est contenu(e) dans une quantité de 0,006 à 1,0 % en poids, de préférence 0,01 à 0,5 % en poids, par rapport au poids total de la masse sèche.

5. Utilisation selon une ou plusieurs des revendications précédentes, dans laquelle il s'agit d'un enduit de sol à base de ciment ou de sulfate de calcium.

6. Utilisation selon une ou plusieurs des revendications précédentes, dans laquelle l'enduit de sol mélangé à de l'eau présente une valeur de pH alcaline comprise dans la plage de pH de 9 à 12.

7. Utilisation selon une ou plusieurs des revendications précédentes, dans laquelle l'enduit de sol mélangé à de l'eau présente de l'eau dans une quantité de 10 à 60 % en poids par rapport au poids total de la masse sèche.
